# EUROPÄISCHE PATENTSCHRIFT

(11) **EP 3 208 113 B1**
(45) Veröffentlichungstag und Bekanntmachung des Hinweises auf die Patenterteilung: **08.05.2019**
(21) Anmeldenummer: 16204914.2
(22) Anmeldetag: 19.12.2016
(51) Int. Cl.: B60C 11/12, B60C 11/13, B60C 11/11

(54) **FAHRZEUGLUFTREIFEN**
PNEUMATIC TYRES FOR A VEHICLE
PNEUMATIQUES DE VÉHICULE

(30) Priorität: 22.02.2016 DE 102016202655
(43) Veröffentlichungstag der Anmeldung: 23.08.2017
(73) Patentinhaber: Continental Reifen Deutschland GmbH, 30165 Hannover (DE)
(72) Erfinder: Behr, Ulrich, 30167 Hannover (DE); Thevanayagam, Paul, 30419 Hannover (DE)
(74) Vertreter: Finger, Karsten

(56) Entgegenhaltungen:
- EP-A1- 2 886 371
- JP-A- 2003 011 619

## Beschreibung

Die Erfindung betrifft einen Fahrzeugluftreifen in Radialbauart mit einem Laufstreifen mit Profilpositiven, wie beispielsweise Profilblöcken, in welchen Einschnitte ausgebildet sind, welche sich um bis zu 45° von der axialen Richtung abweichend erstrecken und in radialer Richtung zumindest abschnittsweise jeweils bis in eine Tiefe von 70% bis 100% der maximalen Profiltiefe reichen sowie jeweils durch zwei Einschnittwände und einen Einschnittgrund begrenzt sind, wobei jeder Einschnitt einen am Einschnittgrund beginnenden radial inneren Einschnittabschnitt aufweist, welcher eine Breite von 0,4 mm bis 1,2 mm aufweist, wobei zumindest eine der Einschnittwände zur Laufstreifenaußenfläche eine Fase aufweist.

Es ist bekannt und üblich Profilpositive von Laufstreifen von Fahrzeugluftreifen, wie beispielsweise Profilbänder oder Blöcke von Profilblockreihen, mit Einschnitten verschiedenster Ausgestaltungen zu versehen, um Reifen gute Nassgriffeigenschaften sowie gute Bremseigenschaften auf nassen Fahrbahnen zu verleihen. Derartige Einschnitte können die Profilpositive durchqueren oder innerhalb der Profilpositive auslaufen und eine Einschnittwand aufweisen, die eine zur Laufstreifenaußenfläche verlaufende Fase aufweist. Die Einschnitte werden üblicherweise dadurch erzeugt, dass Lamellenbleche in die Vulkanisationsform eingegossen oder in der Vulkanisationsform in speziell gefrästen Schlitzen verankert sind, sodass sich beim Einformen des Rohreifens in die Vulkanisationsform die Lamellenbleche von der Formoberfläche in den Reifenrohling hineindrücken. Dabei wird der Reifenrohling zur Ausformung des Laufstreifenprofils üblicherweise mittels eines Heizbalges gegen die mit Lamellenblechen bestückte Formoberfläche gepresst.

Um ein "Einrollen" der die Einschnitte an der Laufstreifenaußenfläche begrenzenden Kanten beim Bremsen zu vermeiden, ist es ferner üblich, die den Einschnitt begrenzenden Einschnittwände zur Laufstreifenaußenfläche hin anzufasen, sodass am Übergang der jeweiligen Einschnittwand zur Laufstreifenaußenfläche eine schmale Schrägfläche, eine Fase, ausgebildet ist. Diese Fasen verbreitern die Einschnitte an der Laufstreifenaußenfläche, was sich nachteilig auf das Abrollgeräusch des Reifens auswirken kann.

Aus der DE 10 2007 051 645 A1 ist ein Fahrzeugluftreifen mit einem Laufstreifen bekannt, welcher durch Querrillen voneinander getrennte Profilblöcke aufweist. Die Querrillen erstrecken sich beispielsweise unter einem Winkel von 10° zur axialen Richtung. Am Rillengrund der Querrillen ist jeweils ein in radialer Richtung bis auf die Profiltiefe reichender Einschnitt ausgebildet, welcher eine Breite von 0,5 mm bis 1,0 mm aufweist.

Aus der JP 2003 011 619 A ist ein Fahrzeugluftreifen mit einem Laufstreifen bekannt, in dessen Profilpositiven Einschnitte ausgebildet sind, welche, im Querschnitt betrachtet, zur radialen Richtung unter einem Winkel von 3° bis 15° in das Profilpositiv hineinverlaufen. Die Einschnitte weisen einen radial inneren Einschnittabschnitt mit einer Breite von bis zu 2,5 mm, beispielsweise einer Breite von 1,0 mm, auf. Bei einer Variante ist an der einen Einschnittwand eine Fase ausgebildet, welche sich beginnend an der Laufstreifenperipherie aus vier Abschnitten zusammensetzt, einem konvexen Abschnitt gefolgt von einem geraden Abschnitt, auf welchen ein konkaver Abschnitt und schließlich wieder ein konvexer Abschnitt folgt.

Der Erfindung liegt die Aufgabe zugrunde, bei einem Fahrzeugluftreifen der eingangs genannten Art, die in Profilpositiven des Laufstreifens vorgesehenen Einschnitte derart zu gestalten, dass die Entwässerungswirkung der Einschnitte und damit insbesondere die Nassbremseigenschaften verbessert werden.

Gelöst wird die gestellte Aufgabe erfindungsgemäß dadurch, dass sich die Fase aus einem eine ebene Schrägfläche bildenden radial äußeren Fasenabschnitt und einem im Querschnitt konkav gekrümmten radial inneren Fasenabschnitt mit einer in axialer Richtung ermittelten Breite von 0,5 mm bis 1,2 mm zusammensetzt.

Bei erfindungsgemäß ausgeführten Einschnitten vergrößern die konkav gekrümmten radial inneren Fasenabschnitte das Wasseraufnahmevolumen des Einschnittes und verbessern derart die Entwässerung und damit die Nassbremseigenschaften des Reifens. Die zur Ausformung erfindungsgemäßer Einschnitte verwendeten Lamellenbleche weisen vorteilhafter Weise an jener Stelle, die den konkav gekrümmten radial inneren Fasenabschnitt formt, eine lokale konkav gekrümmte Verdickung auf, welche ein stabiles Verankern der Lamellenbleche in der Reifenvulkanisationsform unterstützt. Die Verdickung des Lamellenbleches schützt dieses sowohl beim Gießprozess der Reifenformsegmente als auch beim Einformen des Reifens in die Vulkanisationsform vor Verbiegen.

Bei einer bevorzugten Ausführungsform der Erfindung bildet der radial innere Fasenabschnitt eine am radial inneren Endabschnitt der Fase ausgebildete lokale Einbuchtung. Diese Einbuchtung wird dabei vorzugsweise derart ausgeführt, dass sie im Querschnitt entlang eines Kreisbogens, vorzugsweise eines Viertelkreisbogens, verläuft und ferner vorzugsweise auch derart, dass eine Tangente an ihrer tiefsten Stelle zumindest im Wesentlichen parallel zur Schrägfläche des radial äußeren Fasenabschnittes verläuft. Am Lamellenblech ist daher eine entsprechend ausgebildete lokale Verdickung vorgesehen, die das Lamellenblech beim Gießen der Formsegmente und auch beim Einformen des Reifen in die Vulkanisationsform wirkungsvoll vor einem Verbiegen schützt.

Bei einer weiteren Ausführungsform der Erfindung bildet der radial innere Fasenabschnitt eine Übergangsrundung der Fase zum anschließenden Wandabschnitt. Auch die Übergangsrundung kann entlang eines Kreisbogens ausgebildet sein.

Besonders bevorzugt ist eine Ausführung, bei welcher der erwähnte Kreisbogen einen Radius von 0,5mm bis 1, 2mm aufweist, wobei die Größe des der Radius des Kreisbogens mit der axialen Breite des radial inneren Fasenabschnittes auch übereinstimmen kann.

Um ein "Einrollen" der die erfindungsgemäß ausgeführten Einschnitte an der Laufstreifenaußenfläche begrenzenden Kanten bei unterschiedlichen Belastungen bzw. Fahrbedingungen besonders wirkungsvoll zu vermeiden sind besondere Ausgestaltungen der die Schrägfläche bildenden radial äußeren Fasenabschnitte besonders vorteilhaft.

Bei einer dieser Ausgestaltungen verläuft der die Schrägfläche bildende radial äußere Fasenabschnitt zur radialen Richtung unter einem Winkel von 30° bis 70°, insbesondere 40°bis 50,° und vorzugsweise bis in eine Tiefe, welche 15% bis 30% der Tiefe des Einschnittes beträgt.

Bei einer weiteren Ausführungsvariante der Erfindung reicht die Fase bis in eine Tiefe, welche 40% bis 65% der Tiefe des Einschnittes beträgt. In diesem Fall ist es vorteilhaft, wenn der die Schrägfläche bildende radial äußere Fasenabschnitt zur radialen Richtung im Wesentlichen unter einem Winkel von 15° bis 30°, insbesondere von 20° bis 25°, verläuft.

Gemäß einer weiteren bevorzugten Ausführung erstreckt sich der eine ebene Schrägfläche bildende radial äußere Fasenabschnitt im Querschnitt über zumindest 60%, insbesondere über zumindest 70%, der Länge der Querschnittkontur der Fase.

Bei einer weiteren besonders vorteilhaften Ausführungsvariante der Erfindung ist an beiden Einschnittwänden des Einschnittes eine erfindungsgemäß gestaltete Fase ausgebildet. Derart gestaltete Einschnitte sind vor allem in bestimmten Laufstreifenbereichen besonders vorteilhaft.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Ansicht eines Ausschnittes eines Laufstreifens eines Fahrzeugluftreifens mit einer Ausführungsvariante der Erfindung,
Fig. 2 einen Querschnitt durch einen Einschnitt entlang der Linie II-II der Fig. 1 und
Fig. 3 bis Fig. 7 zu Fig. 2 analoge Querschnitte mit weiteren Ausführungsvarianten der Erfindung.

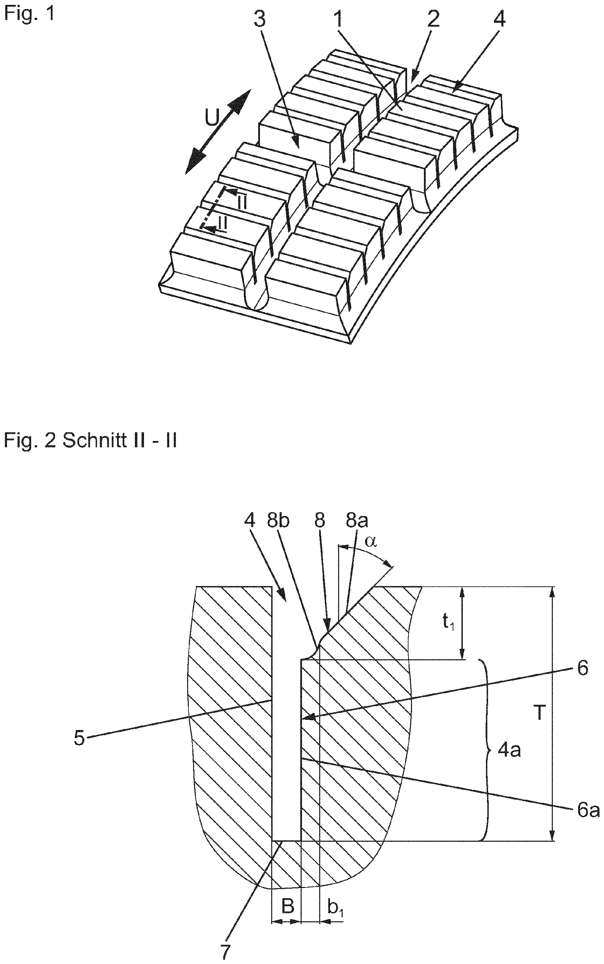

In Fig. 1 sind von einem Laufstreifen eines Fahrzeugluftreifens in Radialbauart, insbesondere eines für den Einsatz unter winterlichen Fahrbedingungen geeigneten Reifens für Personenkraftwagen, Vans oder Light-Trucks, vier Profilblöcke 1 dargestellt, wobei die Umfangsrichtung mit dem Doppelpfeil U gekennzeichnet ist.

Die Profilblöcke 1 gehören zu zwei in Umfangsrichtung U im zentralen Bereich des Laufstreifens verlaufenden Profilblockreihen, welche beim gezeigten Ausführungsbeispiel durch eine gerade verlaufende Umfangsrille 2 voneinander getrennt sowie von weiteren nicht bezeichneten Umfangsrillen begrenzt sind.

Innerhalb der Profilblockreihen sind in Umfangsrichtung benachbarte Profilblöcke 1 jeweils durch eine beim gezeigten Ausführungsbeispiel gerade verlaufende Querrille 3 voneinander getrennt, welche in die die Profilblockreihe begrenzenden Umfangsrillen einmündet. Die Querrillen 3 weisen voneinander in Umfangsrichtung die üblichen Abstände von 20,0 mm bis 40,0 mm auf und verlaufen im Wesentlichen in axialer Richtung oder unter einem von der axialen Richtung um bis zu 45° abweichenden Winkel.

Jeder Profilblock 1 ist mit einer Anzahl von Einschnitten 4 versehen, wobei bei der gezeigten Ausführungsvariante vier übereinstimmend ausgeführte Einschnitte 4 pro Profilblock 1 vorgesehen sind. Die Einschnitte 4 erstrecken sich zumindest im Wesentlichen parallel zueinander sowie beim gezeigten Ausführungsbeispiel im Wesentlichen parallel zu den Querrillen 3 und durchqueren jeweils den Profilblock 1. Die gegenseitigen Abstände der Einschnitte 4 innerhalb eines Profilblockes 1 stimmen zumindest im Wesentlichen überein und sind vorzugsweise im Wesentlichen gleich groß zu den Abständen zwischen dem jeweils in Umfangsrichtung U am weitesten außenliegenden Einschnitt 4 und der Profilblockkante bei der jeweiligen Querrille 3. Sämtliche Einschnitte 4 weisen über ihren Verlauf vorzugsweise einen im Wesentlichen gleichbleibenden Querschnitt auf.

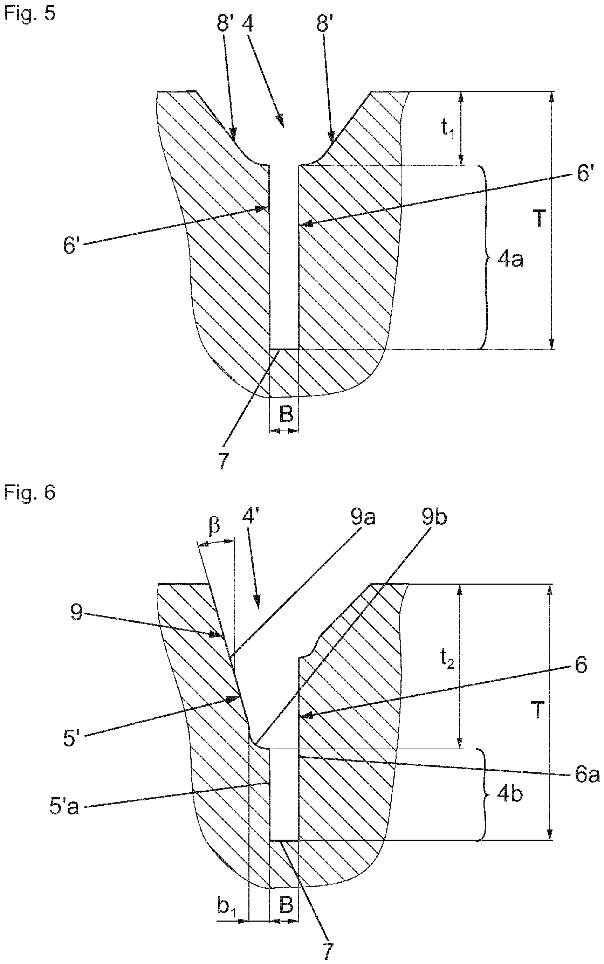

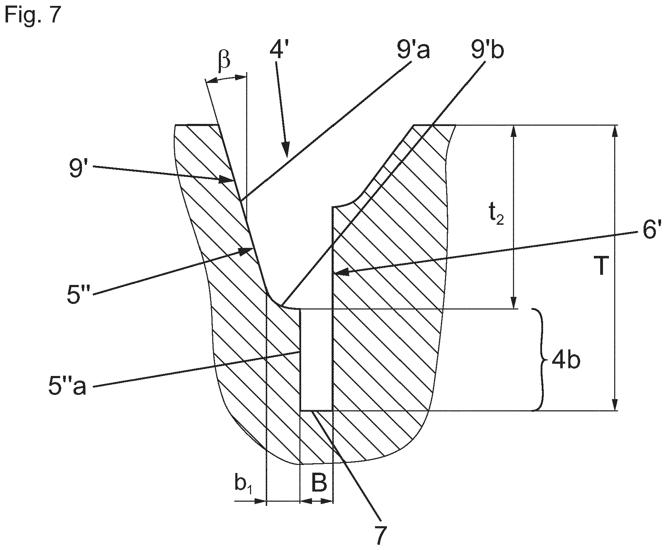

Fig. 2 bis Fig. 5 zeigen Querschnitte durch Ausführungsvarianten eines Einschnittes 4, Fig. 6 und Fig. 7 zeigen Querschnitte durch Ausführungsvarianten eines Einschnittes 4'.

Wie Fig. 2 bis Fig. 7 zeigen, reicht jeder Einschnitt 4, 4' in radialer Richtung zumindest abschnittsweise bis in eine Tiefe T, welche 70% bis 100%, insbesondere 80% bis 90%, der jeweils vorgesehenen Profiltiefe entspricht.

Bei den in Fig. 2 bis Fig. 5 gezeigten Ausführungsformen ist der Einschnitt 4 durch zwei Einschnittwände 5, 6, 6' in verschiedenen Kombinationen, und einen Einschnittgrund 7 begrenzt und weist einen radial inneren Einschnittabschnitt 4a auf. Der radial innere Einschnittabschnitt 4a weist eine vorzugsweise konstante Breite B von 0,4 mm bis 1,2 mm auf und reicht Richtung Laufstreifenaußenfläche bis in eine Tiefe t₁, welche 15% bis 30% der Tiefe T beträgt.

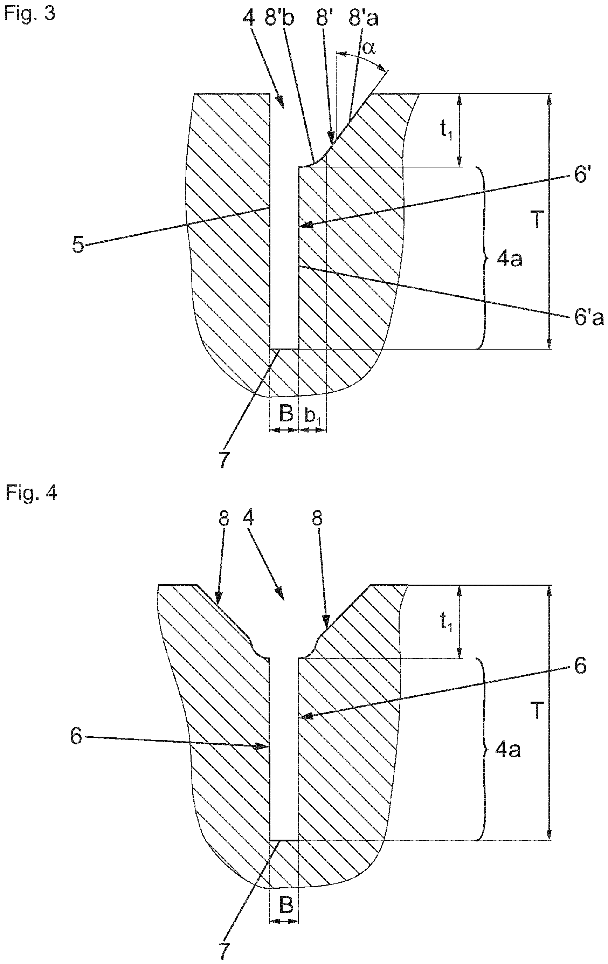

Bei den in Fig. 2 und Fig. 3 gezeigten Varianten verläuft die Einschnittwand 5 bis zur Laufstreifenaußenfläche im Wesentlichen in radialer Richtung, die gegenüber dieser befindliche Einschnittwand 6, 6' setzt sich aus einem an den Einschnittgrund 7 anschließenden radial inneren im Wesentlichen in radialer Richtung verlaufenden Wandabschnitt 6a, 6'a und einer zur Außenfläche des Profilblockes 1 verlaufenden Fase 8, 8' zusammen. Der Wandabschnitt 6a, 6'a begrenzt gemeinsam mit dem Einschnittgrund 7 und der Einschnittwand 5 den radial inneren Einschnittabschnitt 4a. Die Fase 8, 8' schließt in der Tiefe t₁ an das radial äußere Ende des Wandabschnittes 6a, 6'a an.

Bei der in Fig. 2 gezeigten Ausführung weist die Fase 8 einen im Querschnitt über den Großteil ihrer Erstreckung verlaufenden und eine Schrägfläche bildenden radial äußeren Fasenabschnitt 8a auf, welcher im Querschnitt daher im Wesentlichen gerade sowie unter einem Winkel α von 30° bis 70°, insbesondere von 40° bis 50°, zur radialen Richtung verläuft. Der Winkel α ist über die Erstreckung des Einschnittes 4 vorzugsweise konstant, kann sich jedoch über den Einschnittverlauf auch ändern. Am radial inneren Ende des Fasenabschnittes 8a ist eine kleine lokale Einbuchtung ausgebildet, welche im Querschnitt einen gegenüber der Laufstreifenaußenfläche konkav gekrümmten, vorzugsweise entlang eines Kreisbogens, insbesondere eines Viertelkreises, gekrümmten, radial inneren Fasenabschnitt 8b bildet. In axialer Richtung weist der radial innere Fasenabschnitt 8b eine Breitenerstreckung b₁ von 0,5 mm bis 1,2 mm auf. Der Radius einer kreisbogenförmig ausgebildeten Einbuchtung beträgt ebenfalls 0,5 mm bis 1,2 mm. Die Einbuchtung ist derart ausgebildet, dass eine Tangente an der tiefsten Stelle der Einbuchtung parallel zum radial äußeren Fasenabschnitt 8a verläuft.

Bei der Ausführung gemäß Fig. 3 weist die Fase 8' ebenfalls einen eine Schrägfläche bildenden radial äußeren Fasenabschnitt 8'a auf, welcher zur radialen Richtung unter dem Winkel α von 30° bis 70°, vorzugsweise von 40° bis 50°, verläuft. Am radial inneren Ende des Fasenabschnitt 8'a schließt eine Übergangsrundung an, welche einen im Querschnitt gegenüber der Laufstreifenaußenfläche nur leicht konkav gekrümmten, radial inneren Fasenabschnitt 8'b bildet, welcher knickfrei an den radial äußeren Fasenabschnitt 8'a anschließt. In axialer Richtung weist der radial innere Fasenabschnitt 8'b ebenfalls die Breitenerstreckung b₁ auf. Der Radius einer kreisbogenförmig ausgebildeten Übergangsrundung beträgt ebenfalls 0,5 mm bis 1,2 mm. Die Übergangsrundung ist insbesondere derart ausgebildet, dass eine Tangente an ihrer Schnittstelle mit dem Wandabschnitt 6'a in axialer Richtung verläuft.

Der Einschnitt 4 gemäß Fig. 4 ist bezüglich einer durch seine Mitte verlaufende Mittelebene symmetrisch ausgeführt und weist zwei gleiche und gemäß der Einschnittwand 6 der Fig. 2 gestaltete Einschnittwände 6 auf. Der in Fig. 5 gezeigte Einschnitt 4 ist ebenfalls bezüglich einer durch seine Mitte verlaufende Mittelebene symmetrisch ausgeführt und weist zwei Einschnittwände 6' auf, die der Einschnittwand 6' gemäß Fig. 3 entsprechen. Demnach sind bei diesen Ausführungsvarianten beide Einschnittwände 6, 6' mit gleich ausgeführten Fasen 8, 8' versehen.

Bei den in Fig. 6 und 7 gezeigten Varianten weist der Einschnitt 4' jeweils einen radial inneren Einschnittabschnitt 4b auf, welcher Richtung Laufstreifenaußenfläche bis in eine Tiefe t₂ reicht, welche 40% bis 65% der Tiefe T des Einschnittes 4' beträgt.

Der gemäß Fig. 6 ausgeführte Einschnitt 4' weist eine Einschnittwand 6 auf, deren Ausgestaltung der Einschnittwand 6 gemäß Fig. 2 entspricht, sowie eine Einschnittwand 5', welche sich aus einem unmittelbar an den Einschnittgrund 7 anschließenden radial inneren Wandabschnitt 5'a und einer zur Laufstreifenaußenfläche verlaufenden Fase 9 zusammensetzt. Der Wandabschnitt 5'a begrenzt gemeinsam mit dem ihm gegenüberliegenden Wandabschnitt 6a der Einschnittwand 6 und dem Einschnittgrund 7 den radial inneren Einschnittabschnitt 4b. Die Fase 9 weist einen im Querschnitt über zumindest 80% ihrer Erstreckung verlaufenden radial äußeren Fasenabschnitt 9a auf, welcher zur radialen Richtung unter einem Winkel β von 15° bis 30°, insbesondere von 20° bis 25°, verläuft. Am radial inneren Ende des Fasenabschnittes 9a ist eine Einbuchtung ausgebildet, welche im Querschnitt einen gegenüber der Laufstreifenaußenfläche konkav gekrümmten, vorzugsweise entlang eines Kreisbogens gekrümmten, radial inneren Fasenabschnitt 9b bildet. In axialer Richtung weist der radial innere Fasenabschnitt 9b die Breitenerstreckung b₁ auf.

Fig. 7 zeigt eine Ausführung eines Einschnittes 4', welcher eine Einschnittwand 6' aufweist, deren Ausgestaltung der Einschnittwand 6' gemäß Fig. 3 entspricht. Die zweite Eischnittwand 5" setzt sich, analog zu Fig. 6, aus einem radial inneren Wandabschnitt 5"a und einer Fase 9' zusammen. Die Fase 9' weist einen Fasenabschnitt 9'a auf, welcher analog zum Fasenabschnitt 9a gemäß Fig. 6 ausgeführt ist. Am radial inneren Ende des Fasenabschnitt 9'a schließt eine Übergangsrundung an, welche einen im Querschnitt gegenüber der Laufstreifenaußenfläche nur leicht konkav gekrümmten, radial inneren Fasenabschnitt 9'b bildet, welcher knickfrei an den radial äußeren Fasenabschnitt 9'a anschließt. In axialer Richtung weist der radial inneren Fasenabschnitt 9'b ebenfalls die Breitenerstreckung b₁ auf.

Bei sämtlichen Ausführungsvarianten erstreckt sich der radiale äußere Fasenabschnitt 8a, 8'a, 9a, 9'a im Querschnitt jeweils über zumindest 60%, vorzugsweise über zumindest 70%, der Länge der Querschnittskontur der Fase 8, 8', 9, 9'. Bei einem im Querschnitt entlang eines Kreisbogens gekrümmten radial inneren Fasenabschnitt 8b, 8'b, 9b, 9'b kann der Radius des Kreisbogens mit der Breite b₁ des Fasenabschnittes 8b, 8'b, 9b, 9'b übereinstimmen.

Unter im Wesentlichen in radialer Richtung verlaufenden Einschnittwänden werden solche verstanden, die in radialer Richtung oder unter einem von der radialen Richtung um bis zu 10°, insbesondere um bis zu 5°, abweichenden Winkel verlaufen, derart, dass die Breite des Einschnittes Richtung Laufstreifenaußenfläche etwas größer wird.

Die dargestellten und beschriebenen Ausführungsvarianten können ferner in beliebiger Weise kombiniert werden. Ferner können sich die Einschnitte 4, 4' um bis zu 45° von der axialen Richtung abweichend in den Profilblöcken 1 erstrecken, sowie innerhalb der Profilblöcke 1 enden oder auslaufen. Sämtliche beschriebene Ausführungsvarianten der Einschnitte können auch in Profilbändern oder dergleichen ausgebildet sein.

### Bezugsziffernliste

- 1: Profilblock
- 2: Umfangsrille
- 3: Querrille
- 4, 4': Einschnitt
- 4a, 4b: Einschnittabschnitt
- 5, 5', 5", 6, 6': Einschnittwand
- 6a, 6'a, 5'a, 5"a: radial innerer Wandabschnitt
- 8, 8', 9, 9': Fase
- 8a, 8'a, 9a, 9'a: radial äußerer Fasenabschnitt
- 8b, 8'b, 9b, 9'b: radial innerer Fasenabschnitt
- 7: Einschnittgrund
- B, b₁: Breite
- T, t₁, t₂: Tiefe
- α, β: Winkel

## Patentansprüche

1. Fahrzeugluftreifen in Radialbauart mit einem Laufstreifen mit Profilpositiven, wie beispielsweise Profilblöcken (1), in welchen Einschnitte (4, 4') ausgebildet sind, welche sich um bis zu 45° von der axialen Richtung abweichend erstrecken und in radialer Richtung zumindest abschnittsweise jeweils bis in eine Tiefe (T) von 70% bis 100% der maximalen Profiltiefe reichen sowie jeweils durch zwei Einschnittwände (5, 5', 5", 6, 6') und einen Einschnittgrund (7) begrenzt sind, wobei jeder Einschnitt (4, 4') einen am Einschnittgrund (7) beginnenden radial inneren Einschnittabschnitt (4a, 4b) aufweist, welcher eine Breite (B) von 0,4 mm bis 1,2 mm aufweist, wobei zumindest eine der Einschnittwände (5, 5', 5", 6, 6') zur Laufstreifenaußenfläche eine Fase (8, 8', 9, 9') aufweist,
**dadurch gekennzeichnet,**
**dass** sich die Fase (8, 8', 9, 9') aus einem eine ebene Schrägfläche bildenden radial äußeren Fasenabschnitt (8a, 8'a, 9a, 9'a) und einem im Querschnitt konkav gekrümmten radial inneren Fasenabschnitt (8b, 8'b, 9b, 9'b) mit einer in axialer Richtung ermittelten Breite (b₁) von 0,5 mm bis 1,2 mm zusammensetzt.

2. Fahrzeugluftreifen nach Anspruch 1, **dadurch gekennzeichnet, dass** der radial innere Fasenabschnitt (8b, 9b) eine am radial inneren Endabschnitt der Fase (8, 9) ausgebildete lokale Einbuchtung bildet.

3. Fahrzeugluftreifen nach Anspruch 1, **dadurch gekennzeichnet, dass** der radial innere Fasenabschnitt (8'b, 9'b) eine Übergangsrundung der Fase (8', 9') zum anschliessenden Wandabschnitt (5"a, 6'a) bildet.

4. Fahrzeugluftreifen nach Anspruch 3, **dadurch gekennzeichnet, dass** der eine Übergangsrundung bildende Fasenabschnitt (8'b, 9'b) im Querschnitt knickfrei an den radial äußeren Fasenabschnitt (8'a, 9'a) anschließt.

5. Fahrzeugluftreifen nach einem der Ansprüche 1 bis 4, **dadurch gekennzeichnet, dass** der die Schrägfläche bildende radial äußere Fasenabschnitt (8a, 8'a) zur radialen Richtung unter einem Winkel (α) von 30° bis 70°, insbesondere von 40° bis 50°, verläuft.

6. Fahrzeugluftreifen nach einem der Ansprüche 1 bis 5, **dadurch gekennzeichnet, dass** die Fase (8, 8') bis in eine Tiefe (t₁), welche 15% bis 30%, der der Tiefe (T) des Einschnittes (4) beträgt, reicht.

7. Fahrzeugluftreifen nach einem der Ansprüche 1 bis 4, **dadurch gekennzeichnet, dass** der die Schrägfläche bildende radial äußeren Fasenabschnitt (9a, 9'a) zur radialen Richtung im Wesentlichen unter einem Winkel (β) von 15° bis 30°, insbesondere von 20° bis 25°, verläuft, wobei die Fase (9, 9') bis in eine Tiefe (t₂), welche 40% bis 65% der Tiefe (T) des Einschnittes (4') beträgt, reicht.

8. Fahrzeugluftreifen nach einem der Ansprüche 1 bis 7, **dadurch gekennzeichnet, dass** sich der eine ebene Schrägfläche bildende radial äußere Fasenabschnitt (8a, 8'a, 9a, 9'a) im Querschnitt über zumindest 60 %, insbesondere über zumindest 70 %, der Länge der Querschnittskontur der Fase (8, 8', 9, 9') erstreckt.

9. Fahrzeugluftreifen nach einem der Ansprüche 1 bis 8, **dadurch gekennzeichnet, dass** an beiden Einschnittwänden des Einschnittes (4, 4') eine Fase (8, 8', 9, 9') ausgebildet ist, welche sich jeweils aus einem eine ebene Schrägfläche bildenden radial äußeren Fasenabschnitt (8a, 8'a, 9a, 9'a) und einem im Querschnitt konkav gekrümmten radial inneren Fasenabschnitt (8b, 8'b, 9b, 9'b) zusammensetzt.

10. Fahrzeugluftreifen nach einem der Ansprüche 1 bis 9, **dadurch gekennzeichnet, dass** der radial innere Fasenabschnitt (8b, 8'b, 9b, 9'b) im Querschnitt entlang eines Kreisbogens, insbesondere eines Viertelkreises, gekrümmt ist.

11. Fahrzeugluftreifen nach Anspruch 10, **dadurch gekennzeichnet, dass** der Radius des Kreisbogens 0,5 mm bis 1, 2 mm beträgt.

12. Fahrzeugluftreifen nach Anspruch 10 oder 11, **dadurch gekennzeichnet, dass** der Radius des Kreisbogens mit der axialen Breite (b₁) des radial inneren Fasenabschnittes (8b, 8'b, 9b, 9'b) übereinstimmt.

13. Fahrzeugluftreifen nach einem der Ansprüche 1 bis 12, **dadurch gekennzeichnet, dass** die Einschnitte (4, 4') das jeweilige Profilpositiv durchqueren.

## Claims

1. Pneumatic vehicle tyre of radial type of construction having a tread with profile positives, such as for example profile blocks (1), in which there are formed sipes (4, 4') which extend so as to deviate from the axial direction by up to 45° and which, in a radial direction, extend at least in portions in each case to a depth (T) of 70% to 100% of the maximum profile depth and which are delimited in each case by two sipe walls (5, 5', 5", 6, 6') and by a sipe base (7), wherein each sipe (4, 4') has a radially inner sipe portion (4a, 4b) which begins at the sipe base (7) and which has a width (B) of 0.4 mm to 1.2 mm, wherein at least one of the sipe walls (5, 5', 5" , 6, 6') has a bevel (8, 8', 9, 9') to the tread outer surface,
**characterized**
**in that** the bevel (8, 8', 9, 9') is made up of a radially outer bevel portion (8a, 8'a, 9a, 9'a), which forms a planar oblique surface, and a radially inner bevel portion (8b, 8'b, 9b, 9'b), which is concavely curved in cross section and which has a width (b₁), determined in the axial direction, of 0.5 mm to 1.2 mm.

2. Pneumatic vehicle tyre according to Claim 1,
**characterized in that** the radially inner bevel portion (8b, 9b) forms a local indentation formed at the radially inner end portion of the bevel (8, 9) .

3. Pneumatic vehicle tyre according to Claim 1,
**characterized in that** the radially inner bevel portion (8'b, 9'b) forms a rounded transition of the bevel (8', 9') to the adjoining wall portion (5"a, 6'a) .

4. Pneumatic vehicle tyre according to Claim 3,
**characterized in that** the bevel portion (8'b, 9'b) which forms a rounded transition adjoins the radially outer bevel portion (8'a, 9'a) without a kink in cross section.

5. Pneumatic vehicle tyre according to any of Claims 1 to 4, **characterized in that** the radially outer bevel portion (8a, 8'a) which forms the oblique surface runs at an angle (α) of 30° to 70°, in particular of 40° to 50°, with respect to the radial direction.

6. Pneumatic vehicle tyre according to any of Claims 1 to 5, **characterized in that** the bevel (8, 8') extends as far as a depth (t₁) which amounts to 15% to 30% of the depth (T) of the sipe (4).

7. Pneumatic vehicle tyre according to any of Claims 1 to 4, **characterized in that** the radially outer bevel portion (9a, 9'a) which forms the oblique surface runs substantially at an angle (β) of 15° to 30°, in particular of 20° to 25°, with respect to the radial direction, wherein the bevel (9, 9') extends to a depth (t₂) which amounts to 40% to 65% of the depth (T) of the sipe (4').

8. Pneumatic vehicle tyre according to any of Claims 1 to 7, **characterized in that** the radially outer bevel portion (8a, 8'a, 9a, 9'a) which forms a planar oblique surface extends, in cross section, over at least 60%, in particular over at least 70%, of the length of the cross-sectional contour of the bevel (8, 8', 9, 9') .

9. Pneumatic vehicle tyre according to any of Claims 1 to 8, **characterized in that** a bevel (8, 8', 9, 9') which is made up of a radially outer bevel portion (8a, 8'a, 9a, 9'a), which forms a planar oblique surface, and a radially inner bevel portion (8b, 8'b, 9b, 9'b), which is concavely curved in cross section, is formed on both sipe walls of the sipe (4, 4').

10. Pneumatic vehicle tyre according to any of Claims 1 to 9, **characterized in that** the radially inner bevel portion (8b, 8'b, 9b, 9'b) is, in cross section, curved along a circular arc, in particular along a quadrant.

11. Pneumatic vehicle tyre according to Claim 10,
**characterized in that** the radius of the circular arc amounts to 0.5 mm to 1.2 mm.

12. Pneumatic vehicle tyre according to Claim 10 or 11,
**characterized in that** the radius of the circular arc corresponds to the axial width (b₁) of the radially inner bevel portion (8b, 8'b, 9b, 9'b).

13. Pneumatic vehicle tyre according to any of Claims 1 to 12, **characterized in that** the sipes (4, 4') extend across the respective profile positive.

## Revendications

1. Pneumatique de véhicule de construction radiale, comprenant une bande de roulement avec des parties profilées positives, telles que par exemple des blocs profilés (1), dans lesquelles sont réalisées des entailles (4, 4'), qui s'étendent en s'écartant de la direction axiale au plus jusqu'à 45° et qui s'étendent dans la direction radiale au moins en partie à chaque fois jusqu'à une profondeur (T) de 70 % à 100 % de la profondeur maximale et qui sont à chaque fois limitées par deux parois d'entaille (5, 5', 5", 6, 6') et un fond d'entaille (7), chaque entaille (4, 4') présentant une portion d'entaille radialement interne (4a, 4b) commençant au fond d'entaille (7), qui présente une largeur (B) de 0,4 mm à 1,2 mm, au moins l'une des parois d'entaille (5, 5', 5" , 6, 6') présentant un biseau (8, 8', 9, 9') vers la surface extérieure de la bande de roulement,
**caractérisé en ce que**
le biseau (8, 8', 9, 9') se compose d'une portion de biseau radialement extérieure (8a, 8'a, 9a, 9'a) formant une surface oblique plane, et d'une portion de biseau radialement intérieure (8b, 8'b, 9b, 9'b) de courbure concave en section transversale, avec une largeur (b₁) déterminée dans la direction axiale de 0,5 mm à 1,2 mm.

2. Pneumatique de véhicule selon la revendication 1,
**caractérisé en ce que** la portion de biseau (8b, 9b) forme un renfoncement local réalisé au niveau de la portion d'extrémité radialement interne du biseau (8, 9).

3. Pneumatique de véhicule selon la revendication 1,
**caractérisé en ce que** la portion de biseau radialement intérieure (8'b, 9'b) forme un arrondi de transition du biseau (8', 9') pour la portion de paroi s'y raccordant (5"a, 6'a).

4. Pneumatique de véhicule selon la revendication 3,
**caractérisé en ce que** la portion de biseau (8'b, 9'b) formant un arrondi de transition se raccorde en section transversale sans inflexion à la portion de biseau (8'a, 9'a) radialement extérieure.

5. Pneumatique de véhicule selon l'une quelconque des revendications 1 à 4, **caractérisé en ce que** la portion de biseau (8a, 8'a) radialement extérieure formant la surface oblique s'étend par rapport à la direction radiale suivant un angle (α) de 30° à 70°, en particulier de 40° à 50°.

6. Pneumatique de véhicule selon l'une quelconque des revendications 1 à 5, **caractérisé en ce que** le biseau (8, 8') s'étend jusqu'à une profondeur (t₁) qui vaut 15 % à 30 % de la profondeur (T) de l'entaille (4).

7. Pneumatique de véhicule selon l'une quelconque des revendications 1 à 4, **caractérisé en ce que** la portion de biseau (9a, 9'a) radialement extérieure formant la surface oblique s'étend par rapport à la direction radiale essentiellement suivant un angle (β) de 15° à 30°, en particulier de 20° à 25°, le biseau (9, 9') s'étendant jusqu'à une profondeur (t₂) qui représente 40 % à 65 % de la profondeur (T) de l'entaille (4').

8. Pneumatique de véhicule selon l'une quelconque des revendications 1 à 7, **caractérisé en ce que** la portion de biseau radialement extérieure (8a, 8'a, 9a, 9'a) formant une surface oblique plane s'étend en section transversale sur au moins 60 %, en particulier sur au moins 70 %, de la longueur du contour en section transversale du biseau (8, 8', 9, 9').

9. Pneumatique de véhicule selon l'une quelconque des revendications 1 à 8, **caractérisé en ce qu'**au niveau des deux parois d'entaille de l'entaille (4, 4'), est réalisé un biseau (8, 8', 9, 9') qui se compose à chaque fois d'une portion de biseau radialement extérieure (8a, 8'a, 9a, 9'a) formant une surface oblique plane et d'une portion de biseau radialement intérieure (8b, 8'b, 9b, 9'b) de courbure concave en section transversale.

10. Pneumatique de véhicule selon l'une quelconque des revendications 1 à 9, **caractérisé en ce que** la portion de biseau radialement intérieure (8b, 8'b, 9b, 9'b) présente en section transversale une courbure le long d'un arc de cercle, notamment d'un quart de cercle.

11. Pneumatique de véhicule selon la revendication 10, **caractérisé en ce que** le rayon de l'arc de cercle est compris entre 0,5 mm et 1,2 mm.

12. Pneumatique de véhicule selon la revendication 10 ou 11, **caractérisé en ce que** le rayon de l'arc de cercle coïncide avec la largeur axiale (b₁) de la portion de biseau radialement intérieure (8b, 8'b, 9b, 9'b).

13. Pneumatique de véhicule selon l'une quelconque des revendications 1 à 12, **caractérisé en ce que** les entailles (4, 4') traversent la partie profilée positive respective.
